(19) Europäisches Patentamt

European Patent Office

Office européen des brevets

(11) EP 0 667 099 B1

(12) EUROPEAN PATENT SPECIFICATION

(45) Date of publication and mention
of the grant of the patent:
**27.12.2000 Bulletin 2000/52**

(51) Int Cl.[7]: **A21D 8/04**, C12N 1/18,
A21D 6/00
// (C12N1/18, C12R1:865)

(21) Application number: **95907491.5**

(22) Date of filing: **04.08.1993**

(86) International application number:
**PCT/JP93/01091**

(87) International publication number:
**WO 95/04463 (16.02.1995 Gazette 1995/08)**

(54) **BAKING PROCESS**

BACKVERFAHREN

PROCEDE DE CUISSON AU FOUR

(84) Designated Contracting States:
**AT BE CH DE DK ES FR GB GR IE IT LI LU MC NL PT SE**

(43) Date of publication of application:
**16.08.1995 Bulletin 1995/33**

(83) **Declaration under Rule 28(4) EPC (expert solution)**

(73) Proprietor: **KYOWA HAKKO KOGYO CO., Ltd.
Chiyoda-ku, Tokyo 100 (JP)**

(72) Inventors:
• **KYOGOKU, Yasuhisa
Ibaraki 300-03 (JP)**

• **KAWASAKI, Hideki
Tokyo 194 (JP)**
• **OUCHI, Kozo
Saitama 349-01 (JP)**

(74) Representative: **Harding, Charles Thomas
D. Young & Co.
21 New Fetter Lane
London EC4A 1DA (GB)**

(56) References cited:
**WO-A-93/01724        JP-A- 5 076 348**

• **DATABASE WPI Section Ch, Week 9108 Derwent Publications Ltd., London, GB; Class D16, AN 91-056181 & SU-A-1 551 733 ((ALKI=) AS LATV KIRKHENSHTE) , 23 March 1993**

**Description**

Technical Field

This invention relates to a process for making bread being excellent in the specific volume, etc.

Background of the Invention

In the bread-making trade, freeze-storage dough (frozen dough) is widely used as a means for the rationalization of production. Very high energy costs are required for freezing, freeze-storage, freeze-transportation, thawing, etc. In, order to reduce these energy costs, a dough which is capable of being stored through refrigeration is used [Report by Katsuro Kaitaku Chosa Kenkyu Jigyo (active development investigation project), 36 - 45 (1990); B & C, 26 - 37 (1990); Basic Knowledge for New Bread Making, 148 - 180 (July 10, 1988, 7th edition)]. However, such a dough capable of being stored through refrigeration poses a problem with respect to the storage stability of the yeast contained in the dough, because the yeast deteriorates during the long-term storage.

Further, fats such as butter, margarine, etc. are folded into the dough in the production of a Danish pastry, croissants, etc., and the uniform layers of the dough and the fat are indispensable to making a good product. To satisfy this requirement, the folding of the fat is ordinarily conducted batchwise. In each batchwise operation, increase in the temperature of the dough and the temperature of the fat affects the extensions of the dough and the folded fat. For this reason, a so-called retarding method is employed in which freezing is repeatedly carried out in a refrigerator. With the ordinary yeast, fermentation proceeds, and thus the remaining activity of the yeast is lowered when the fermentation is completed. In addition to the deterioration of the yeast due to the storage through refrigeration, the bread making by the retarding method involves a lot of problems.

Still further, when an ordinary yeast is contained in a refrigeration-storage dough for a domestic purpose (which is mostly packed in a sealed container), the refrigeration-storage dough has no storage stability and therefore the dough is degraded. In order to prevent the degradation of the dough, a chemical foaming agent is used instead of the yeast in many cases. Nevertheless, such a dough cannot give a satisfactory bread product in regard to flavor, appearance, etc.

EP-A-0 487 878 discloses a *Saccharomyces cerevisiae* strain exhibiting "lti" ("low temperature inactive") properties, i.e., survival at refrigeration temperatures (3-10°C) and reactivation at 13-14°C. Said strain can be used in doughs to be worked or in bread rolls (see column 1, lines 43 to 48 and column 2, lines 41-56).

Database WPI, Section Ch, Week 9108, Derwent Publications Ltd., London, GB; Class D16, AN 91-056181 & SU-A-1 551 733 (ALKI=) AS LATV KIRKHENSHTE, 23 March 1993 (abstract) discloses the strain P-21 of *Saccharomyces cerevisiae* which shows high fermenting activity and raising power, retained after 12 months storage at 4°C. Said strain is used in producing bread.

WO-A-93 01724 describes a method of forming a refrigeratable dough product, wherein said method comprises:

(i) selecting a low temperature sensitive yeast, wherein said yeast is selected from strains of *S.cerevisiae* and

(ii) mixing said yeast with water and flour to form a dough.

Disclosure of the Invention

This invention relates to a process for making bread characterized in that a yeast of the genus Saccharomyces which exhibits cold-sensitive fermentingability is added to a dough.

In this invention, any yeast of the genus Saccharomyces can be used so long as it exhibits cold-sensitive fermentingability.

In the present specification, the cold-sensitive fermentingability means that the yeast can normally ferment at from 20 to 40°C and shows a fermentingability which is the one third or below, of that of a commercial yeast at a temperature of from -2 to 15°C. The yeast used in this invention can be obtained, for example, by the following method. Cells of a commercial yeast (for example, baker's yeast, sake yeast, wine yeast, beer yeast and yeasts of miso and soy sauce) are mutagenized by irradiating with an ultraviolet light, radiation, etc. according to a known mutation-inducing method. The mutagenized cells are contacted with antibiotics (for examples, antimycin and nystatin), and cultivated at a low temperature of from 10 to 15°C. Cells which cannot be proliferated or which exhibit very low proliferation at these low temperatures are selected (primary selection). The strains which are selected in this primary selection include strains which cannot be proliferated or which exhibit very low proliferation because of lack of fermentingability or a very low level of fermentingability and strains which exhibit low proliferation due to the other causes. From among these strains, selected are the strains which lack fermentingability or have a very low level of fermentingability at a low temperature of from 2 to 7°C (secondary selection). Then, from among the strains selected in the secondary selection, selected are the strains which regain fermentingability at a temperature of from 20 to 40°C (tertiary selection). Finally, from among the strains selected in the tertiary selection, selected are the strains which exhibit as excellent a fermentingability as the ordinary yeast under the fermentation conditions of the bread dough at a temperature of from 20 to 40°C (quaternary selection).

A specific example of the strains thus selected is Saccharomyces cerevisiae RZT-3 (hereinafter referred to as "RZT-3 strain").

A method for obtaining RZT-3 strain is described below.

Commercial bread yeast Dia Yeast YST (made by Kyowa Hakko Kogyo Co., Ltd.; hereinafter referred to as "YST strain") is cultivated in a YPD culture medium comprising 1% of yeast extract, 2% of polypeptone and 2% of glucose at 30°C for 12 hours, and centrifuged to collect cells. The collected cells are suspended in an aqueous solution of 0.067 M potassium dihydrogenphosphate to an absorbance of 1.0, that is, such that the number of cells is $1 \times 10^7$ per milliliter. The cell suspension is irradiated with ultraviolet light to the extent that the survival rate is from 1 to 30%, and then subjected to the primary selection.

The primary selection is conducted in the following manner. Twenty microliters of the resulting cell suspension is inoculated in 1 ml of the YPD culture medium and cultivated at 30°C for 12 hours. After the cultivation is completed, cells are collected by centrifugation. The collected cells are cultivated in a nitrogen-free minimum culture medium comprising 0.17% of yeast nitrogen base having no amino acid and no ammonium sulfate (made by Difco) and 1% of glucose at 30°C for 12 hours. After the cultivation is completed, the cells are re-collected by centrifugation. The collected cells are suspended in 0.9 ml of a YPD culture medium containing $1 \times 10^{-6}$M antimycin, and cultivated at 10°C for 36 hours.

Further, 10 μg/ml nystatin is added to the culture, and the culture is allowed to stand at 10°C for 2 hours. The culture is centrifuged to collect cells. The collected cells are spread on a YPD plate culture medium comprising 1% of yeast extract, 2% of polypeptone, 2% of glucose and 2% of agar, and cultivated at 30°C for 48 hours to grow colonies. The grown colonies are selected as follows to thereby obtain RZT-3 strain. The RZT-3 strain was deposited with the Fermentation Research Institute Agency of Industrial Science and Technology on May 26, 1992 in terms of the Budapest Treaty, and has been assigned to Accession No. FERM BP-3871.

The secondary selection is conducted as follows. The colonies separated in the primary selection are transferred on to a YPG plate culture medium comprising 1% of yeast extract, 2% of polypeptone, 3% of glycerol and 2% of agar, and cultivated at 30°C for 24 hours to grow colonies. A pigment agar culture medium comprising 0.5% of yeast extract, 1% of peptone, 10% of sucrose, 0.02% of bromocresol purple and 1% of agar is overlayed on the colonies. The colonies are incubated at 5°C for from 6 to 12 hours. During this time period, the color around the colonies is observed, to select lacking fermentingability or having low fermentingability the strains. That is, the strains having strong fermentingability at 5°C, change that color from purple to yellow and the strains which lack fermentingability or have low fermentingability, do not or slightly change that color.

The tertiary selection is conducted as follows. The colonies selected in the secondary selection are transferred on a YPG plate culture medium, and cultivated at 30°C for 24 hours to grow colonies. The pigment agar culture medium is overlayed on the colonies, and the colonies are cultivated at 30°C for 2 hours. The strains having sufficient fermentingability (the strains which change the color around the colonies from purple to yellow) are selected.

The quaternary selection is conducted as follows. With the strains selected in the tertiary selection, a bread dough is prepared to have the following composition by the following method. The amount of a carbon dioxide gas generated at from -2 to 40°C is measured and employed as a criterion for determination of fermentingability.

| Dough composition: | (Parts by weight) |
| --- | --- |
| Strong flour | 100 |
| Sugar | 15 |
| Salt | 1.2 |
| Water | 58 |
| Yeast cells obtained in Example 1 hereinafter | 3 |

Method:
Mixing (with a National complete mixer at 100 rpm for 2 minutes)
↓
Fermenting (at 30°C for 45 minutes)
↓
Dividing (35.44g)

↓

Allowing to stand (at 10°C for 3 hours)

↓

Measuring the amount of the carbon dioxide gas which is generated at temperatures shown in Table 1 for 2 hours.

The amount of carbon dioxide gas generated at from -2 to 15°C for 2 hours is measured by a method in which 35.44g of the bread dough are packed in a 100-milliliter conical flask and the carbon dioxide gas generated is moved into a cylinder filled with a saturated NaCl aqueous solution. The amount of the carbon dioxide gas generated at from 20 to 40°C is measured with a Fermograph (supplied by ATTO CO., LTD.). The results are shown in Table 1.

Table 1

| Strain | Amount of carbon dioxide gas generated (ml) | | | | | |
|--------|------|------|--------|------|-------|-------|
|        | −2°C | 0°C  | 2.5°C  | 5°C  | 10°C  | 15°C  |
| YST    | 0.0  | 0.5  | 1.1    | 2.0  | 14.3  | 26.0  |
| RZT-3  | 0.0  | 0.0  | 0.0    | 0.2  | 2.9   | 7.1   |

| Strain | Amount of carbon dioxide gas generated (ml) | | | | |
|--------|------|------|--------|-------|-------|
|        | 20°C | 25°C | 30°C   | 35°C  | 40°C  |
| YST    | 65.7 | 91.7 | 145.8  | 190.9 | 211.2 |
| RZT-3  | 59.9 | 93.5 | 147.9  | 188.3 | 221.9 |

As is apparent from the table, YST strain does not substantially ferment at -2°C and 0°C, and its fermentingability is gradually increased at 2.5°C or higher. Meanwhile, RZT-3 strain does not substantially ferment at from -2 to 5°C, and its fermentingability is approximately one third of that of the YST strain even at 15°C, and is approximately the same as that of the YST strain at 20°C or higher.

In the present invention, as the dough to which yeast is added, any dough can be used, so long as the dough is obtained by adding water to a wheat flour and a salt. Specifically, a dough which is obtained by adding, if necessary, sugar, shortening, butter, skim milk, yeast food and egg to raw materials such as a wheat flour, a salt and fat, and kneading the mixture together with water is mentioned.

A method for making bread is described hereinafter.

Cultivation of bread yeast

Yeast cells which are suitable for making bread can be obtained by cultivating yeast in an ordinary culture medium containing a carbon source, a nitrogen source, an inorganic substance, amino acid and vitamin under aerobic conditions while adjusting the temperature to from 27 to 32°C, recovering the cells and washing the recovered cells.

The carbon source to be contained in the culture medium includes, for example, glucose, sucrose, starch hydrolyzate and molasses. Blackstrap molasses is the most preferable.

The nitrogen source to be contained in the culture medium includes, for example, ammonia, ammonium chloride, ammonium sulfate, ammonium carbonate, ammonium acetate, urea, yeast extract and corn steep liquor.

The inorganic substance includes, for example, magnesium phosphate and potassium phosphate. The amino acid includes, for example, glutamic acid. The vitamin includes, for example, pantothenic acid and thiamine. Feeding culture is suitable in the cultivation.

Method for making bread

The bread dough to be used is obtained by adding, to a wheat flour, a salt, fat, water, the above-obtained yeast and, if necessary, sugar, shortening, butter, skim milk, yeast food and egg. Bread in the form of a loaf of bread, a bun or the like can be made according to the typical method, for example, the straight dough method and the sponge and dough method. The former is a method in which all the raw materials are mixed from the beginning. The latter is a method in which yeast and water are first added to a part of wheat flour to form a sponge mix, and after the completion of the sponge fermentation, the remaining raw materials are mixed with the fermented sponge.

Specifically, in the straight dough method, all the raw materials are kneaded, then fermented at from 25 to 30°C, divided, benched, molded and packed. The resulting product is subjected to proofing (at from 35 to 42°C), and then baked (at from 200 to 240°C).

Separately, in the sponge and dough method, water is added to approximately 70% of the wheat flour used, yeast and yeast food, and the mixture is kneaded and fermented at from 25 to 35°C for from 3 to 5 hours. Thereafter, the remaining raw materials (wheat flour, water, salt and shortening) are added thereto. The mixture is kneaded, divided, benched, molded and packed. The resulting product is subjected to proofing (at from 35 to 42°C) and then baked -(at from 200 to 240°C).

A Danish pastry, croissants, etc. are made, for example, in the following manner.

Water is added to raw materials, that is, a wheat flour, a salt, the above-obtained yeast, sugar, shortening, egg and skim milk, and the mixture is kneaded to form a dough. Then, a fat such as butter, margarine, etc. is put into the dough. Rolling and folding are repeated to make multiple layers of the dough and the fat. The step of folding the fat when the dough is prepared, is called rolling-in. The rolling-in can be accomplished by either of two methods. In one method, the raw materials are kneaded at a low kneading temperature of approximately 15°C without cooling until the intended number of layers are given. The other method accounts for that, during the folding, the difference between the extension of the dough and the extension of the fat due to the increase in the temperature of dough and the fat damages uniformity of the layers. The other method is the so-called retarding method in which the cooling is conducted several times in a refrigerator or a freezer for the purpose of restoring the properties of the dough during the operation.

The obtained dough is rolled, divided, molded and packed. The resulting dough is subjected to proofing (at from 30 to 39°C), and then baked (at from 190 to 210°C).

Best Mode for Carrying out the Invention

This invention is illustrated specifically with the use of the following Examples.

Example 1:

Cultivation of bread yeast

One platinum loopful of RZT-3 cells was inoculated in a 300-milliliter conical flask containing 30 ml of a YPD culture medium, and cultivated at 30°C for 24 hours. After the cultivation was completed, the total amount of the culture was put into a 2-liter conical flask equipped with a baffle and containing 270 ml of a molasses culture medium comprising 3% of molasses, 0.193% of urea, 0.046% of potassium dihydrogenphosphate and 2 drops of a defoamer, and cultivated at 30°C for 24 hours with shaking. After the cultivation was completed, the cells were collected by centrifugation. The cells were washed twice with deionized water. Subsequently, the moisture content was removed to an absorptive ceramic plate to obtain the cells.

Also, YST cells were subjected to the same procedure as the RZT-3 cells.

The thus-obtained yeast cells were used to make bread.

Making bread

A loaf of bread was obtained from the following dough composition and by the following method.

| Dough composition: | (parts by weight) |
| --- | --- |
| Strong flour | 100 |
| Sugar | 5 |
| Salt | 2 |
| Shortening | 5 |

(continued)

| Dough composition: | (parts by weight) |
|---|---|
| Yeast food<br>    (Pandia C-500 made by Kyowa Hakko Kogyo Co., Ltd.) | 0.1 |
| Yeast cells<br>(RZT-3 strain or YST strain) | 2 |
| Water | 66 |

Method:

Mixing

[low speed (100 rpm)          3 minutes
medium speed (190 rpm)      6 minutes
high speed (290 rpm)          5 minutes

Kneading temperature (28°C)
Dividing (450g)
Storing (5°C, 7 days)
Benching (room temperature, 15 minutes)
Molding (molder)
Proofing (40°C, 90%RH, 75 minutes)
Baking (220°C, 25 minutes)

The fermentingability before and after refrigeration (storage at 5°C for 7 days) was measured by a Fermograph using 30g of the dough, and it was shown by the total amount (ml) of the carbon dioxide gas generated at 30°C for 2 hours. The refrigeration resistance was calculated by the following equation.

$$\text{Refrigeration resistance (\%)} =$$

$$\frac{\text{Fermentingability (ml) after refrigeration}}{\text{Fermentingability (ml) before refrigeration}} \times 100$$

The results are shown in Table 2.

Table 2

| Strain | Fermentingability before refrigeration (ml) | Fermentingability after refrigeration (ml) | Refrigeration resistance (%) |
|---|---|---|---|
| YST | 114.6 | 40.0 | 34.9 |
| RZT-3 | 108.9 | 99.7 | 91.6 |

The specific volume of the obtained loaf of bread was measured by a rape seed displacement method. Further, appearance and crumb grain were observed. The results are shown in Table 3.

Table 3

| Strain | Specific volume (cm³/g) | Evaluation | |
|---|---|---|---|
| | | Appearance | Crumb grain |
| YST | 3.19 | × | × |
| RZT-3 | 4.79 | ◎ | ◎ |
| Note: Evaluation standard          ◎: good<br>× : poor | | | |

Example 2:

A butter roll was obtained according to the following dough composition and by the following method.

| Dough composition: | (parts by weight) |
|---|---|
| Strong flour | 80 |
| Soft flour | 20 |
| Sugar | 10 |
| Salt | 1.8 |
| Salt-free butter | 15 |
| Skim milk | 3 |
| Whole egg | 8 |
| Yeast food (Pandia C-500) | 0.1 |
| Yeast cells (RZT-3 strain or YST strain) | 3 |
| Water | 54 |

Method:

Mixing

[low speed (100 rpm)      10 minutes
medium speed (190 rpm)      5 minutes
high speed (290 rpm)      30 seconds

Kneading temperature (26°C)
Dividing (50g)
Benching (room temperature, 15 minutes)
Molding (molder)
Storing (5°C, 1, 4 and 7 days)
    ↓
Proofing (36°C, 85%RH, 40 minutes)
Baking (210°C, 12 minutes)

In accordance with Example 1, the fermentingability and the specific volume were measured, the refrigeration resistance was calculated, and the appearance and the crumb grain were observed. The results are shown in Tables 4 and 5.

Table 4

| Strain | Fermentingability (ml) | | | | Refrigeration resistance (after 7 days*) (%) |
|---|---|---|---|---|---|
| | Before refrigeration | 1st day* | 4th day* | 7th day* | |
| YST | 130.7 | 134.8 | 105.0 | 33.8 | 25.6 |
| RZT-3 | 121.4 | 133.8 | 112.6 | 104.8 | 86.3 |

* Day(s) of cold storage of the dough

Table 5

| Strain | Specific volume (cm³/g) | | | Evaluation after 7 days* | |
|---|---|---|---|---|---|
| | 1st day* | 4th day* | 7th day* | Appearance | Crumb grain |
| YST | 4.38 | 4.09 | 2.86 | × | × |

* Day(s) of cold storage of the dough

Table 5   (continued)

| Strain | Specific volume (cm³/g) | | | Evaluation after 7 days* | |
|---|---|---|---|---|---|
| | 1st day* | 4th day* | 7th day* | Appearance | Crumb grain |
| RZT-3 | 4.98 | 4.67 | 3.87 | ◎ | ◎ |

* Day(s) of cold storage of the dough

Example 3:

A Danish pastry was obtained according to the following dough composition and by the following method (retarding method).

| Dough composition: | (parts by weight) |
|---|---|
| Strong flour | 70 |
| Soft flour | 30 |
| Sugar | 10 |
| Salt | 1.2 |
| Shortening | 6 |
| Whole egg | 10 |
| Yeast food (Pandia C-500) | 0.1 |
| Yeast cells (RZT-3 strain or YST strain) | 6 |
| Water | 50 |
| Folding butter | 50 |

Method:

Mixing

[low speed (100 rpm)      3 minutes
medium speed (190 rpm)      8 minutes
high speed (290 rpm)]      1 minute

Kneading temperature (22°C)
Dividing (1,000g × 2)
Retarding (-20°C, 30 minutes)
Rolling-in      [folding into three layers, twice (folding butter: 50% per the wheat flour)]
Retarding (5°C, 60 minutes)
Rolling      (folding into three layers, once, rolling at 4 mm)
Dividing and molding
      [50g, rolled shape (for fermograph, 30g)]
Storing (5°C, 1, 4 and 7 days)
      ↓
Proofing (35°C, 75%RH, 70 minutes)
Baking (200°C, 12 minutes)

The dough was divided, molded and then cirectly baked without being stored (Immediate baking), or the dough was divided, molded, stored in a refrigerator at 5°C for 1, 4 and 7 days, and then baked.

In accordance with Example 1, the fermentingability and the specific volume were measured, the refrigeration resistance was calculated, and the appearance and the crumb grain were observed. The results are shown in Tables 6 and 7.

Table 6

| Strain | Fermentingability (ml) | | | | Refrigeration resistance (after 7 days*) (%) |
|---|---|---|---|---|---|
| | Before refrigeration | 1st day* | 4th day* | 7th day* | |
| YST | 207.3 | 208.8 | 135.5 | 61.7 | 30.1 |
| RZT-3 | 204.2 | 200.2 | 161.1 | 161.9 | 82.3 |

\* Day(s) of cold storage of the dough

Table 7

| Strain | Specific volume (cm3/g) | | | |
|---|---|---|---|---|
| | Immediate baking | 1st day* | 4th day* | 7th day* |
| YST | 5.20 | 4.99 | 3.86 | 3.40 |
| RZT-3 | 5.30 | 5.20 | 5.10 | 4.85 |

| Strain | Evaluation | | | | | | | |
|---|---|---|---|---|---|---|---|---|
| | Immediate baking | | 1st day* | | 4th day* | | 7th day* | |
| | appearance | crumb grain | appearance | crumb grain | appearance | crumb grain | appearance | crumb grain |
| YST | ◎ | ◎ | ○ | ○ | × | × | × | × |
| RZT-3 | ◎ | ◎ | ◎ | ◎ | ◎ | ◎ | ○ | ○ |

Note: Evaluation  ◎ : good
                  ○ : fair
                  × : poor
\* Day(s) of storage of the dough

Example 4:

A butter roll was obtained according to the following dough composition and by the following method.

| Dough composition: | (parts by weight) |
|---|---|
| Strong flour | 80 |
| Soft flour | 20 |
| Sugar | 10 |
| Salt | 1.8 |
| Salt-free butter | 15 |
| Skim milk | 3 |
| Whole egg | 8 |
| Yeast food (Pandia C-500) | 0.1 |

(continued)

| Dough composition: | (parts by weight) |
|---|---|
| Yeast cells (RZT-3 strain or YST strain) | 2.5 |
| Water | 54 |

Method:

(1) The raw materials of the above-mentioned dough composition were mixed at low speed (100 rpm) for 10 minutes, at medium speed (190 rpm) for 5 minutes and at high speed (290 rpm) for 30 seconds. The kneading temperature was 26°C.

(2) The obtained dough was divided (50g), then benched at room temperature for 15 minutes, and molded.

(3) After the molding was completed, the dough was packed in a sealed container (filled with a carbon dioxide gas), and immediately stored in a refrigerator at 5°C for from 1 to 5 weeks.

(4) After the storage, the dough was subjected to proofing at 36°C for 30 minutes, and baked at 210°C for 12 minutes.

The specific volume of the obtained butter roll is shown in Table 8.

Table 8

| Strain | Storage period (weeks) | | | | |
|---|---|---|---|---|---|
| | Immediate baking | 1 | 2 | 3 | 5 |
| YST | 4.72 | 2.86 | 2.30 | 2.25 | 2.11 |
| RZT-3 | 4.82 | 4.22 | 3.88 | 3.69 | 3.32 |

## Claims

1. A method for making bread characterized in that a yeast of the genus Saccharomyces which exhibits coldsensitive fermentingability is added to a dough, wherein the cold-sensitive fermentingability means that the yeast can normally ferment at from 20 to 40°C and shows a fermentingability which is one third or below, of that of a commercial yeast at a temperature of from -2 to 15°C.

2. The method according to claim 1, wherein said yeast of the genus Saccharomyces is Saccharomyces cerevisiae RZT-3 (FERM BP-3871).

3. A dough which contains a yeast of the genus Saccharomyces which exhibits cold-sensitive fermentingability, wherein the cold-sensitive fermentingability means that the yeast can normally ferment at from 20 to 40°C and shows a fermentingability which is one third or below, of that of a commercial yeast at a temperature of from -2 to 15°C.

4. The dough according to claim 3, wherein said yeast of the genus Saccharomyces is Saccharomyces cerevisiae RZT-3 (FERM BP-3871).

5. Saccharomyces cerevisiae RZT-3 (FERM BP-3871).

## Patentansprüche

1. Verfahren zur Herstellung von Brot, dadurch gekennzeichnet, daß eine Hefe der Gattung Saccharomyces, die eine kälteempfindliche Fermentationsfähigkeit aufweist, einem Teig zugesetzt wird, wobei die kälteempfindliche Fermentationsfähigkeit bedeutet, daß die Hefe normalerweise bei 20 bis 40° C fermentieren kann und eine Fermentationsfähigkeit zeigt, die ein Drittel oder weniger der einer kommerziell erhältlichen Hefe bei einer Temperatur von -2 bis 15° C ist.

**2.** Verfahren nach Anspruch 1, wobei die Hefe der Gattung Saccharomyces Saccharomyces cerevisiae RZT-3 (FERM BP-3871) ist.

**3.** Teig, der eine Hefe der Gattung Saccharomyces enthält, die eine kälteempfindliche Fermentationsfähigkeit aufweist, wobei die kälteempfindliche Fermentationsfähigkeit bedeutet, daß die Hefe normalerweise bei 20 bis 40° C fermentieren kann und eine Fermentationsfähigkeit zeigt, die ein Drittel oder weniger der einer kommerziell erhältlichen Hefe bei einer Temperatur von -2 bis 15° C ist.

**4.** Teig nach Anspruch 3, wobei die Hefe der Gattung Saccharomyces Saccharomyces cerevisiae RZT-3 (FERM BP-3871) ist.

**5.** Saccharomyces cerevisiae RZT-3 (FERM BP-3871).


**Revendications**

**1.** Procédé de panification, caractérisé en ce que l'on ajoute à une pâte une levure du genre *Saccharomyces* dont le pouvoir de fermentation est sensible au froid, l'expression "pouvoir de fermentation sensible au froid" signifiant que la levure possède un pouvoir de fermentation normal entre 20 et 40 °C, mais qu'à une température de -2 à 15 °C, son pouvoir de fermentation équivaut au plus au tiers de celui d'une levure du commerce.

**2.** Procédé conforme à la revendication 1, dans lequel ladite levure du genre *Saccharomyces* est *Saccharomyces cerevisiae* RZT-3 (FERM BP-3871).

**3.** Pâte contenant une levure du genre *Saccharomyces* dont le pouvoir de fermentation est sensible au froid, l'expression "pouvoir de fermentation sensible au froid" signifiant que la levure possède un pouvoir de fermentation normal entre 20 et 40 °C, mais qu'à une température de -2 à 15 °C, son pouvoir de fermentation équivaut au plus au tiers de celui d'une levure du commerce.

**4.** Pâte conforme à la revendication 3, dans laquelle ladite levure du genre *Saccharomyces* est *Saccharomyces cerevisiae* RZT-3 (FERM BP-3871).

**5.** Saccharomyces cerevisiae RZT-3 (FERM BP-3871).